# EUROPÄISCHE PATENTSCHRIFT

(11) **EP 2 094 517 B1**
(45) Veröffentlichungstag und Bekanntmachung des Hinweises auf die Patenterteilung: **08.08.2018**
(21) Anmeldenummer: 07856215.4
(22) Anmeldetag: 22.11.2007
(51) Int. Cl.: B60K 6/387, B60K 6/40, F16D 25/0638, B60K 6/405

(54) **HYBRIDMODUL FÜR EIN HYBRID-ANTRIEBSSYSTEM EINES FAHRZEUGS**
HYBRID MODULE FOR A HYBRID DRIVE SYSTEM OF A VEHICLE
MODULE HYBRIDE POUR SYSTÈME D'ENTRAÎNEMENT D'UN VÉHICULE

(30) Priorität: 30.11.2006 DE 102006056512
(43) Veröffentlichungstag der Anmeldung: 02.09.2009
(73) Patentinhaber: ZF Friedrichshafen AG, 88046 Friedrichshafen (DE)
(72) Erfinder: WETZEL, Michael, 97523 Schwanfeld (DE); SCHMITT, Guido, 97714 Oerlenbach-Eltingshausen (DE); MÜLLER, Thorsten, 88048 Friedrichshafen (DE); MATSCHAS, Steffen, 97469 Gochsheim (DE); HOHER, Markus, 88069 Tettnang (DE); ESCHENBECK, Linus, 88239 Wangen (DE); BARTHA, Alexander, 97082 Würzburg (DE)
(86) Internationale Anmeldenummer: PCT/EP2007/010110
(87) Internationale Veröffentlichungsnummer: WO 2008/064813

(56) Entgegenhaltungen:
- EP-A- 1 174 633
- EP-A- 1 564 055
- EP-A- 1 712 394
- DE-A1- 10 354 962
- US-A1- 2005 133 328
- US-A1- 2006 230 854

## Beschreibung

### Technisches Gebiet

Die vorliegende Erfindung betrifft ein Hybridmodul für ein Hybrid-Antriebssystem eines Fahrzeugs.

Bei derartigen Hydridmodulen besteht allgemein die Problematik, dass der zur Verfügung stehende Bauraum, der im Wesentlichen axial begrenzt ist durch ein Antriebsaggregat, wie z.B. eine Brennkraftmaschine, und ein Getriebe bzw. eine an das Getriebe anschließende Kupplungsglocke, sehr beschränkt ist. Zudem erstreckt sich im Allgemeinen in einem derartigen Bereich bei Fahrzeugen mit angetriebenen Vorderrädern eine Radantriebswelle, die im Wesentlichen quer zur Fahrzeuglängsrichtung zu einem angetriebenen Vorderrad verläuft. Der vor der Radantriebswelle liegende Bauraum ist im Allgemeinen zu klein, um eine Kupplung oder einen Torsionsschwingungsdämpfer aufzunehmen. Der Bauraum hinter dieser Radantriebswelle ist im Allgemeinen zu klein, um ein vollständiges Hybridmodul, welches beispielsweise eine Trennkupplung, einen Torsionsschwingungsdämpfer, eine Elektromaschine und eine Anfahrkupplung umfassen kann, aufzunehmen.

### Stand der Technik

Aus der DE 199 37 545 A1 ist ein Antriebsstrang für ein Fahrzeug bekannt, bei welchem eine Antriebswelle eines Antriebsmotors, beispielsweise Brennkraftmaschine, über eine Reibungskupplung mit einer Getriebeeingangswelle verbunden ist. An den Eingangsbereich der Reibungskupplung ist weiter ein Rotor einer Elektromaschine drehfest angebunden, welcher bezüglich der Reibungskupplung an der gleichen axialen Seite wie das Antriebsaggregat oder an der entgegengesetzten Seite liegen kann. Auch eine radiale Staffelung einer Reibungskupplung mit vorgeschalteter Torsionsschwingungsdämpferanordnung und einer Elektromaschine ist aus dieser Druckschrift bekannt.

Die nachveröffentlichte deutsche Patentanmeldung 10 2005 044 225.0 offenbart ein Hybridmodul, bei welchem der Rotor einer Elektromaschine über eine trocken laufende Lamellenkupplung und eine Kopplungsanordnung wahlweise in Drehmomentübertragungsverbindung bzw. außer Drehmomentübertragungsverbindung mit einer Antriebswelle, also beispielsweise einer Kurbelwelle einer Brennkraftmaschine, bringbar ist. Abtriebsseitig ist der Rotor der Elektromaschine drehfest gekoppelt mit dem Eingangsbereich einer weiteren Kupplungsvorrichtung, welche wahlweise das Drehmoment zu einer als Abtriebswelle dienenden Getriebeeingangswelle weiterleitet.

Mit der EP 1 564 055 A2 ist ein Hybridmodul für ein Hybrid-Antriebssystem eines Fahrzeugs bekannt geworden, umfassend eine Elektromaschine mit einer Statoranordnung und mit einer Rotoranordnung, eine nasslaufende Lamellenkupplung zur wahlweisen Herstellung/Unterbrechung einer Drehmomentübertragungsverbindung zwischen einer um eine Drehachse drehbare Abtriebswelle und einer Kopplungsanordnung zur drehfesten Ankopplung an eine Antriebswelle einer Brennkraftmaschine. Dabei umfasst die Lamellenkupplung ein antriebsseitiges Lamellenpaket, ein damit in Reibwechselwirkung bringbares abtriebsseitiges Lamellenpaket und ein Kupplungsgehäuse bzw. einen Käfig, welcher mit der Abtriebswelle gekoppelt ist. Das Kupplungsgehäuse ist dort offen ausgeführt, so dass ein Kühlfluid in den Bereich der Elektromaschine gelangen kann. Außerhalb des Kupplungsgehäuses und im Drehmomentübertragungsweg zwischen der Kopplungsanordnung und der Abtriebswelle ist eine Torsionsschwingungsdämpferanordnung vorgesehen, wobei deren Primärseite über die Kopplungsanordnung mit der Antriebswelle und deren Sekundärseite mit einer Zwischenwelle gekoppelt ist. Die Rotoranordnung der Elektromaschine ist zur gemeinsamen Drehung drehfest mit der Abtriebswelle verbunden.

Die EP 1 174 633 A2 offenbart ein Hybridmodul mit allen Merkmalen gemäß dem Oberbegriff von Patentanspruch 1.

### Darstellung der Erfindung

Es ist die Aufgabe der vorliegenden Erfindung, ein Hybridmodul für ein Hybrid-Antriebssystem eines Fahrzeugs mit zur Eingliederung in begrenzte Bauräume kompakter Baugröße vorzusehen.

Erfindungsgemäß wird diese Aufgabe gelöst durch ein Hybridmodul für ein Hybrid-Antriebssystem eines Fahrzeugs, welches die in Patentanspruch 1 angeführte merkmalskombination umfasst.

Bei dem erfindungsgemäßen Hybrid-Antriebsmodul bildet also die nasslaufende Lamellenkupplung die Verbindung zwischen der Rotoranordnung der Elektromaschine und beispielsweise einem als Brennkraftmaschine ausgebildeten Antriebsaggregat und auch zwischen diesem Antriebsaggregat und einer Abtriebswelle. Eine derartige nasslaufende Lamellenkupplung stellt ein in sich vollständig geschlossenes vollgefülltes System dar, bei welchem es möglich ist, das in der Lamellenkupplung zirkulierende Kühl- bzw. Schmiermittel radial innen zuzuführen bzw. abzuleiten. Die Gefahr, dass dieses strömende Medium durch zu starken thermischen Kontakt mit der im Betrieb vergleichsweise heißen Elektromaschine beschädigt wird, kann somit vermieden werden.

Eine insbesondere in axialer Richtung Raum sparende Anordnung kann dadurch geschaffen werden, dass die Lamellenpakete wenigstens bereichsweise in einem von der Elektromaschine umgebenen Raumbereich angeordnet sind.

Das Kupplungsgehäuse kann über die Kopplungsanordnung mit der Antriebswelle gekoppelt werden und kann mit dem antriebsseitigen Lamellenpaket drehfest gekoppelt sein. Dies bedeutet, dass bei dieser Ausgestaltungsform das Kupplungsgehäuse mit dem damit drehfest gekoppelten Lamellenpaket den Eingangsbereich der nasslaufenden Lamellenkupplung bildet.

Aus Gründen des einfacheren Aufbaus und der kompakteren Baugröße kann es vorteilhaft sein, wenn das Kupplungsgehäuse die Rotoranordnung trägt.

Um die Integration des erfindungsgemäßen Hybridmoduls in ein Fahrzeug insbesondere auch unter Berücksichtigung der im vorderen Bereich eines derartigen Fahrzeugs ggf. vorhandenen Radantriebswellen zu erleichtern, wird vorgeschlagen, dass die Kopplungsanordnung wenigstens ein Kopplungselement umfasst, welches einen Aufnahmeraum zur Hindurcherstreckung einer Radantriebswelle begrenzt. Dabei kann vorgesehen sein, dass das Kupplungsgehäuse und der Aufnahmeraum sich wenigstens bereichsweise radial überlappen.

Die vorliegende Erfindung betrifft ferner ein Hybrid-Antriebssystem für ein Fahrzeug, umfassend eine Brennkraftmaschine mit einer Kurbelwelle als Antriebswelle, ein erfindungsgemäßes Hybridmodul, wobei das Hybridmodul vermittels der Kopplungsanordnung mit der Kurbelwelle der Brennkraftmaschine gekoppelt ist, sowie eine Getriebeanordnung mit einer die Abtriebswelle bereitstellenden Getriebeeingangswelle.

Um auch dann, wenn der Antrieb vermittels der Elektromaschine erfolgt, insbesondere zur Durchführung von Gangschaltvorgängen bzw. von Anfahrvorgängen eine Drehmomentunterbrechung im Antriebsstrang zwischen der Elektromaschine und den angetriebenen Rädern bereitstellen zu können, wird vorgeschlagen, dass in der Getriebeanordnung eine Kupplungsanordnung zur wahlweisen Unterbrechung/Herstellung einer Drehmomentübertragungsverbindung zwischen der Getriebeeingangswelle und einer Getriebeausgangswelle vorgesehen ist.

Die Abtriebsnabe kann eine Getriebeeingangsnabe bilden und diese Getriebeeingangsnabe kann gleichzeitig auch eine Pumpennabe bilden, über welche eine in einem Getriebe angeordnete Hydraulikpumpe angetrieben wird, oder kann mit einer derartigen Pumpennabe zu einer Einheit zusammengefasst sein.

### Kurze Beschreibung der Zeichnungen

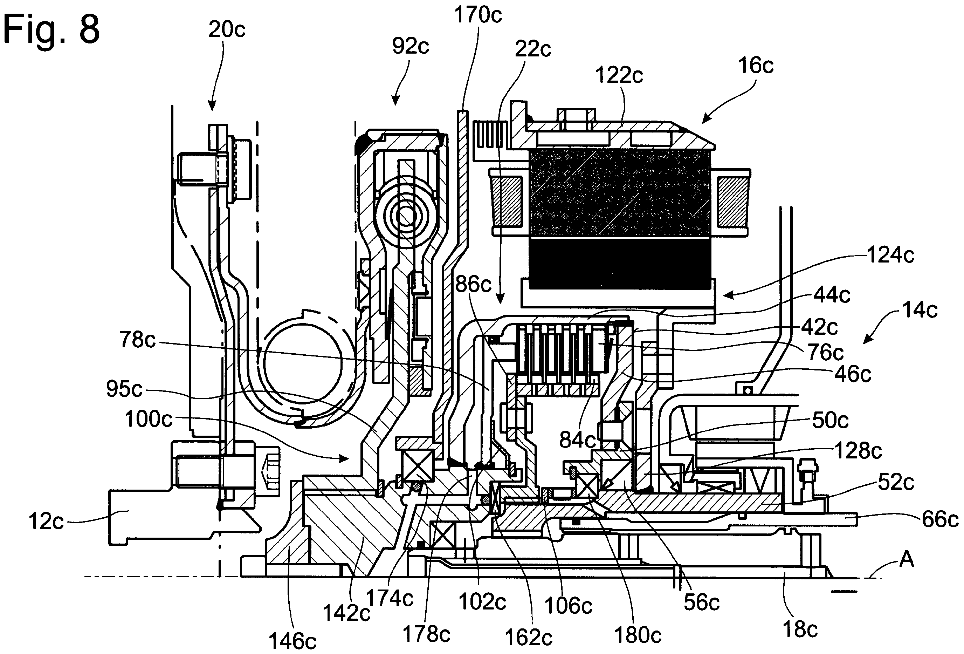

Nachfolgend werden mit Bezug auf die beiliegenden Zeichnungen mehrere Ausführungsformen eines Hybridmoduls detailliert beschrieben, wovon lediglich das mit Fig. 8 dargestellte Hybridmodul gemäß der Erfindung ausgeführt ist.

Es zeigt:
- Fig. 1: eine Teil-Längsschnittansicht eines Hybridmoduls gemäß einer ersten Ausgestaltungsform;
- Fig. 2: eine Abwandlung des in Fig. 1 gezeigten Hybridmoduls;
- Fig. 3: eine Detailansicht einer weiteren Abwandlung des in Fig. 1 gezeigten Hybridmoduls;
- Fig. 4: eine zweite Ausgestaltungsvariante eines Hybridmoduls;
- Fig. 5: eine der Fig. 1 entsprechende Ansicht einer alternativen Ausgestaltungsform;
- Fig. 6: weitere der Fig. 1 entsprechende Ansicht einer alternativen Ausgestaltungsform mit außerhalb der Lamellenkupplung liegender Torsionsschwingungsdämpferanordnung;
- Fig. 7: eine weitere Teil-Längsschnittansicht eines Hybridmoduls mit außerhalb der nasslaufenden Lamellenkupplung liegender Torsionsschwingungsdämpferanordnung;
- Fig. 8: eine weitere Teil-Längsschnittansicht eines Hybridmoduls mit außerhalb der nasslaufenden Lamellenkupplung liegender Torsionsschwingungsdämpferanordnung;
- Fig. 9: eine weitere Teil-Längsschnittansicht eines Hybridmoduls mit außerhalb der nasslaufenden Lamellenkupplung liegender Torsionsschwingungsdämpferanordnung;
- Fig. 10: eine Teil-Längsschnittansicht eines alternativ aufgebauten Hybridmoduls;
- Fig. 11: eine Abwandlung des in Fig. 10 gezeigten Hybridmoduls.

### Bester Weg zur Ausführung der Erfindung

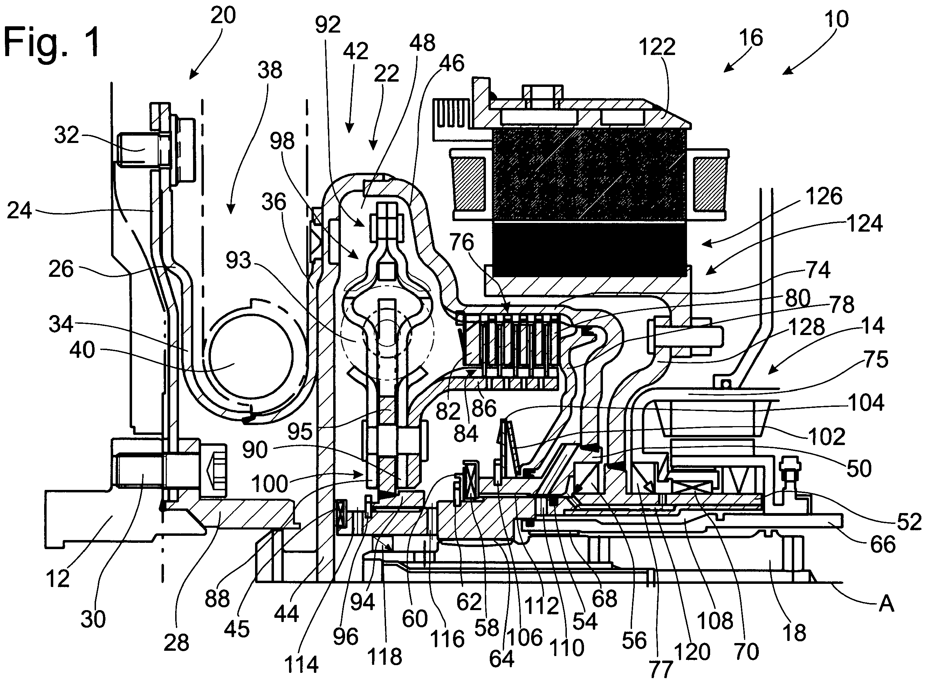

In Fig. 1 ist ein Hybridmodul allgemein mit 10 bezeichnet. Dieses in einen Antriebsstrang eines Fahrzeugs eingegliederte Hybridmodul dient dazu, das von einem Antriebsaggregat, wie z.B. einer Brennkraftmaschine, gelieferte Antriebsdrehmoment an der Antriebswelle 12 desselben, also beispielsweise einer Kurbelwelle, aufzunehmen und in ein hier nur hinsichtlich einiger Komponenten erkennbares Getriebe 14 weiterzuleiten. Weiterhin kann durch eine Elektromaschine 16 des Hybridmoduls 10 ein Antriebsdrehmoment geliefert werden, das alternativ oder zusätzlich von dem durch das Antriebsaggregat gelieferten Drehmoment zum Antreiben eines Fahrzeugs genutzt werden kann, selbstverständlich aber auch dazu genutzt werden kann, ein als Brennkraftmaschine ausgebildetes Antriebsaggregat zu starten.

Die Drehmomentübertragungsverbindung zwischen dem Antriebsaggregat bzw. der Antriebswelle 12 desselben und dem Getriebe 14 bzw. einer als Abtriebswelle des Hybridmoduls 10 wirksamen Getriebeeingangswelle 18 ist über eine allgemein mit 20 bezeichnete Kopplungsanordnung und eine im Drehmomentenfluss und auch axial darauf folgende nasslaufende Lamellenkupplung 22 realisiert. Die Kopplungsanordnung 20 umfasst zwei im Wesentlichen scheibenartige Elemente 24, 26. Das erstgenannte scheibenartige Element 24 ist radial innen in Verbindung mit einer Zentrierhülse 28 durch eine Mehrzahl von Schraubbolzen 30 an die Antriebswelle 12 angebunden und ist radial außen ebenfalls durch Schraubbolzen 32 mit dem anderen scheibenartigen Element 26 verbunden. Das scheibenartige Element 24 kann als so genannte Flexplatte bezeichnet bzw. ausgebildet sein, welche auf Grund ihrer Flexibilität Taumelbewegungen bzw. Achsversätze zulässt bzw. kompensiert.

Das zweitgenannte scheibenartige Element 26 kann, wie im in Fig. 1 dargestellten Ausgestaltungsbeispiel erkennbar, aus zwei Teilen 34, 36 zusammengefügt sein, die nach radial innen einen torusartigen Raumbereich 38 begrenzen und beispielsweise auch radial innen durch Verschweißung miteinander verbunden sein können. In diesen Raumbereich 40 erstreckt sich im Wesentlichen quer zu einer Drehachse A des Hybridmoduls 10 eine Radantriebswelle 40, die von einem Differenzialgetriebe oder dergleichen zu einem anzutreibenden Vorderrad führt.

Ein Kupplungsgehäuse 42 der nasslaufenden Lamellenkupplung 22 umfasst zwei beispielsweise aus Blech gebildete Gehäuseteile 44, 46. Diese sind in einem radial äußeren Bereich zum Bilden eines abgeschlossenen Innenraums 48 durch Verschweißung verbunden. Das Gehäuseteil 44 ist ferner in seinem radial äußeren Bereich durch Vernietung mit dem Teil 36 des scheibenartigen Elements 26 fest verbunden. Auf diese Art und Weise ist also das Getriebegehäuse 42 der nasslaufenden Lamellenkupplung 22 als Eingangsbereich dieser Lamellenkupplung 22 über die Kopplungsanordnung 20 an die Antriebswelle 12 zur gemeinsamen Drehung um die Drehachse A angekoppelt.

An der von dieser Kopplung abgewandten axialen Seite ist das Gehäuseteil 46 mit einem weiteren auch als Drehdurchführung zu bezeichnenden Gehäuseteil 50 des Kupplungsgehäuses 42 beispielsweise durch Verschweißung fest verbunden. Dieses Gehäuseteil 50 weist eine zentrale Öffnung auf, in welche eine auch als Getriebeeingangsnabe zu bezeichnende Abtriebsnabe 52 eingeführt ist. Durch ein in einer Nut dieser Abtriebsnabe 52 vorgesehenes Dichtelement 54, beispielsweise einen Gummidichtring oder dergleichen, und ein weiteres Dichtelement 56, beispielsweise ausgeführt als Radialwellendichtring, ist das Gehäuseteil 50 bezüglich der Abtriebsnabe 52 fluiddicht abgeschlossen. Weiterhin ist das Gehäuseteil 50 in axialer Richtung über ein Axiallager 58 bezüglich der Abtriebsnabe 52 axial abgestützt. Das Axiallager 58 ist über einen mit Bund versehenen Abstützring 60 und einen in eine Nut der Abtriebsnabe 52 eingreifenden Sicherungsring 62 axial gehalten.

Die Abtriebsnabe 52 wiederum ist über eine Verzahnungsanordnung 64 in Drehkopplungseingriff mit der Abtriebswelle 18, also beispielsweise einer Eingangswelle eines Getriebes. Zwischen der Abtriebsnabe 52 und der Abtriebswelle 18 ist eine hülsenartige Stützwelle 66 vorgesehen, an der über ein Gleitlager 68 die Abtriebswelle 18 gelagert ist. Die Abtriebsnabe 52 ist ferner bezüglich des Gehäuses 42, nämlich des Gehäuseteils 44, über ein Axiallager 45 axial abgestützt.

Die Abtriebsnabe 52 ist über ein Lager 70 und ein beispielsweise als Radialwellendichtring ausgeführtes Dichtelement 77 an einem Getriebegehäuse 75 drehbar und fluiddicht gelagert und erstreckt sich somit zusammen mit der Stützwelle 66 in den Innenraumbereich des Getriebes 14.

Das Gehäuseteil 46 der nasslaufenden Lamellenkupplung 22 bildet mit einem radial innerhalb der Elektromaschine 16 liegenden Gehäusebereich 74 einen Lamellenträger für ein durch Verzahnungsformationen mit dem Gehäuseteil 46 drehfest gekoppeltes, bezüglich diesem jedoch in Richtung der Drehachse A in geringem Bereich verschiebbares Lamellenpaket 76. Dieses mit als Außenlamellen ausgeführten Lamellen aufgebaute Lamellenpaket 76 umfasst eine durch einen noch erläuterten Kolben 78 zu beaufschlagende Einstelllamelle 80 und am anderen axialen Ende eine dickere Sicherungslamelle 82, die durch einen Sicherungsring axial am Gehäuseteil 46 abgestützt ist. Es ist selbstverständlich, dass am Gehäuseteil 46 auch ein als separates Bauteil ausgeführter Lamellenträger festgelegt sein könnte, über welchen dann das Lamellenpaket 76 mit dem Gehäuseteil 46 bzw. dem Kupplungsgehäuse 42 zur gemeinsamen Drehung gekoppelt ist.

Ein zweites Lamellenpaket 84 ist mit einem Lamellenträger 86 ebenfalls durch Verzahnungsformationen drehfest, bezüglich diesem jedoch axial beweglich gekoppelt. Der Lamellenträger 86 wiederum ist durch Vernietung mit den beiden Deckscheibenelementen 88, 90 einer allgemein mit 92 bezeichneten Torsionsschwingungsdämpferanordnung fest verbunden. Die Torsionsschwingungsdämpferanordnung 92 ist also innerhalb des Gehäuses 42 angeordnet und umfasst zwischen den beiden Deckscheibenelementen 88, 90 ein Zentralscheibenelement 95, welches über eine nur schematisch angedeutete Dämpferelementenanordnung 93, beispielsweise eine Mehrzahl von im Wesentlichen in Umfangsrichtung sich erstreckenden Schraubendruckfedern, an den beiden Deckscheibenelementen 88, 90 in Umfangsrichtung abgestützt ist. Die die Deckscheibenelemente 88, 90 mit dem Lamellenträger 86 verbindenden Nietbolzen können durch Zusammenwirkung mit dem Zentralscheibenelement 95 gleichzeitig auch die Funktionalität einer Drehwinkelbegrenzung für die Torsionsschwingungsdämpferanordnung 92 bereitstellen.

Das Zentralscheibenelement 92 ist radial innen durch Verschweißung mit einer Torsionsschwingungsdämpfernabe 94 fest verbunden, die wiederum durch Verzahnung mit der Abtriebsnabe 52 drehfest verbunden ist. Durch einen Sicherungsring 96 ist die Torsionsschwingungsdämpferanordnung 92 in definierter axialer Positionierung bezüglich der Abtriebsnabe 52 gehalten.

Bei dem in Fig. 1 dargestellten Aufbau bilden also die beiden Deckscheibenelemente 88, 90 im Wesentlichen die Primärseite 98 der Torsionsschwingungsdämpferanordnung, während die Sekundärseite 100 im Wesentlichen das Zentralscheibenelement 95 und die damit fest verbundene Torsionsschwingungsdämpfernabe 94 umfasst.

Der bereits angesprochene Kolben 78 der Lamellenkupplung 22 ist radial außen und radial innen am Gehäuse 22 fluiddicht und axial bewegbar geführt, nämlich am Gehäuseteil 46 einerseits und am Gehäuseteil 50 andererseits. Eine Tellerfeder 102 ist über einen Stützring 104 und einen Sicherungsring 106 axial bezüglich des Gehäuseteils 50 abgestützt und beaufschlagt den Kolben 78 in einer Richtung von den Lamellenpaketen 76 und 84 weg. Um die Lamellenkupplung 22 in einen Drehmomentübertragungszustand zu bringen, diese also einzurücken, wird über einen zwischen der Abtriebsnabe 52 und der Stützwelle 66 gebildeten Zwischenraum 108 und in der Abtriebsnabe 52 bzw. dem Gehäuseteil 50 gebildete Öffnungen 110, 112 Fluid in einen zwischen dem Kolben 78 und dem Gehäuseteil 46 gebildeten Raumbereich eingespeist und durch Druckerhöhung somit der Kolben 78 in der Fig. 1 nach links, also in Richtung auf die Lamellenpakete 76, 74 zu, beaufschlagt. Diese kommen in Reibwechselwirkung miteinander, wobei beispielsweise an den Lamellen des Lamellenpakets 84 Reibbeläge vorgesehen sein können, um eine ausreichende Drehmomentübertragungskapazität bereitstellen zu können. Soll die Lamellenkupplung ausgerückt werden, wird der Druck wieder gesenkt und der Kolben 78 durch die Vorspannwirkung der Tellerfeder 102 wieder in Richtung von den Lamellenpaketen 76, 84 weg bewegt.

Um den Innenraum 48 des Gehäuses 42 mit kühlendem bzw. auch schmierendem Medium, also einer ölartigen Flüssigkeit zu versorgen, sind in der Gehäusenabe 52 weitere Öffnungen 114, 116 vorgesehen, die voneinander durch ein zwischen der Abtriebsnabe 52 und der Abtriebswelle 18 vorgesehenes Dichtelement 118 getrennt sind. Diese Öffnungen 114, 116 sind in Verbindung mit Kanälen, die in der Abtriebswelle 18 ausgebildet sind und über welche beispielsweise die Flüssigkeit bzw. das Fluid zur Öffnung 114 geleitet wird, und nachdem es den Innenraum 48 durchströmt hat, im Bereich der Öffnung 116 wieder abgezogen wird.

Um Flüssigkeitsleckagen aus dem Innenraum 48 des Kupplungsgehäuses 42 zu vermeiden, ist in der Abtriebsnabe 52 ein Leckagekanal 120 vorgesehen. Dieser ist in einen zwischen den beiden Dichtelementen 54 und 56 gebildeten Zwischenraum offen und kann somit Flüssigkeit aufnehmen, welche das Dichtelement 54 überwunden hat. An seinem anderen Ende ist der Leckagekanal 120 innerhalb des Dichtelements 77 im Getriebegehäuse 75 offen, so dass der zwischen den beiden Dichtelementen 54 und 56 gebildete Raumbereich drucklos gehalten werden kann und mithin die Gefahr, dass auch das Dichtelement 56 durch unter zu hohem Druck stehende Flüssigkeit überwunden wird, praktisch ausgeschlossen ist.

Die Elektromaschine 16 umfasst eine allgemein mit 122 bezeichnete Statoranordnung, die an einer feststehenden Baugruppe, beispielsweise einer Kupplungs- bzw. Getriebeglocke festgelegt sein kann und eine elektrisch erregbare Spulenanordnung aufweist. Ferner umfasst die hier als Innenläufer ausgebildete Elektromaschine 16 eine Rotoranordnung 124, die mit einem beispielsweise mit Permanentmagneten ausgebildeten Wechselwirkungsbereich 126 unmittelbar radial innerhalb der Statoranordnung 122 liegt. Ein Träger 128 der Rotoranordnung erstreckt sich nach radial innen neben und mit geringfügigem Abstand zu dem Gehäuseteil 46 des Kupplungsgehäuses 42 und ist an seinem radial inneren Bereich mit der Abtriebsnabe 52 zwischen dem Gehäuseteil 46 einerseits und dem Getriebegehäuse 75 andererseits durch Verschweißung fest verbunden. Die Rotoranordnung 124 ist mithin mit der Abtriebsnabe 52 fest zur gemeinsamen Drehung um die Drehachse A gekoppelt, so dass bei Rotation der Rotoranordnung 124 auch die Abtriebsnabe 52 um die Drehachse A rotiert.

Je nachdem, ob der Antrieb durch das Antriebsaggregat, also beispielsweise die Brennkraftmaschine, erfolgen soll, oder durch die Elektromaschine 16 erfolgen soll, wird die nasslaufende Lamellenkupplung 22 in einen Einrückzustand oder einen Ausrückzustand gebracht. Bei Antrieb durch die Elektromaschine 16 ist die Lamellenkupplung 22 ausgerückt, so dass lediglich der Ausgangsbereich derselben, also im Wesentlichen der Lamellenträger 86 mit dem Lamellenpaket 84 und die Torsionsschwingungsdämpferanordnung 92 mit der Abtriebsnabe 52 und der Rotoranordnung 124 mitrotieren. Bei Antrieb durch die Brennkraftmaschine wird die Lamellenkupplung 22 eingerückt, so dass über die beiden Lamellenpakete 76, 84 und die Torsionsschwingungsdämpferanordnung 92 ein Drehmoment auf die Abtriebsnabe 92 übertragen wird, welche durch ihre drehfeste Ankopplung an die Abtriebswelle 18 dann diese zur Drehung antreibt. Soll die Brennkraftmaschine gestartet werden, kann das dafür erforderliche Drehmoment durch die Elektromaschine 16 bereitgestellt werden und die Lamellenkupplung 22 als Impulsstartkupplung genutzt werden.

In Fig. 1 ist eine Ausgestaltungsform eines Hybridmoduls 10 gezeigt, welche einerseits einen sehr kompakten Aufbau ermöglicht, nämlich vor allem dadurch, dass die nasslaufende Lamellenkupplung 22 so gestaltet ist, dass sie sich in einem erheblichen Bereich mit der Elektromaschine 16 axial überlappt. Weiterhin überlappt sich die nasslaufende Lamellenkupplung 22 radial mit dem Raumbereich 38, in welchem die Radantriebswelle 40 liegt oder zu positionieren ist, so dass auch hier eine sehr starke Integration anderer Baugruppen eines Fahrzeugs in den Bauraum des Hybridmoduls 10 erfolgen kann. Da bei dieser Ausgestaltungsform weiterhin das Gehäuse 42 der Lamellenkupplung 22 hinsichtlich des Massenträgheitsmoments durch die Kopplungsanordnung 20 an die Antriebswelle 12 angebunden ist, während die Torsionsschwingungsdämpferanordnung 92 mit den damit fest verbundenen Komponenten an die Abtriebswelle 18 angebunden ist, findet hier eine sehr vorteilhafte Aufteilung der Massen und somit des Massenträgheitsmoments statt. Es kann somit auf das Vorsehen zusätzlicher Masseteile im Bereich der Antriebsseite, also massenträgheitsmomentenmäßig der Antriebswelle 12 zugerechnet, verzichtet werden.

Es sei hier darauf hingewiesen, dass insofern, als von antriebsseitig bzw. abtriebsseitig gesprochen wird, dies bezogen ist auf den normalen Zugbetrieb, der als Antriebsaggregat beispielsweise eingesetzten Brennkraftmaschine. Das Lamellenpaket 76, das also über das Gehäuse 42 mit dieser Antriebswelle 12 gekoppelt ist, ist im Sinne der vorliegenden Erfindung dann als antriebsseitiges Lamellenpaket zu betrachten, während das Lamellenpaket 84, das mit der Torsionsschwingungsdämpferanordnung 92 und der Abtriebswelle 18 gekoppelt ist, als abtriebsseitiges Lamellenpaket zu betrachten ist, obgleich selbstverständlich beim Starten einer Brennkraftmaschine durch die Elektromaschine 16 der Drehmomentenfluss über die Abtriebsnabe 52 und die Torsionsschwingungsdämpferanordnung 92 vom Lamellenpaket 84 auf das Lamellenpaket 76 und dann weiter in Richtung zur Antriebswelle 12 verläuft.

Das hier dargestellte Hybridmodul ist besonders vorteilhaft einsetzbar in Verbindung mit einem Automatikgetriebe, in welchem dann eine Anfahrkupplung bereitgestellt ist, die zur Durchführung von Anfahrvorgängen bzw. auch Schaltvorgängen geöffnet bzw. geschlossen werden kann. Im gesamten Antriebsstrang sind dann also zwei Kupplungen vorhanden, nämlich zum einen die nasslaufende Lamellenkupplung 22, die als Trennkupplung bzw. Impulsstartkupplung für die Brennkraftmaschine genutzt werden kann, und die im Getriebe 14 vorgesehen Kupplung, die als Anfahrkupplung bzw. Schaltkupplung eingesetzt werden kann.

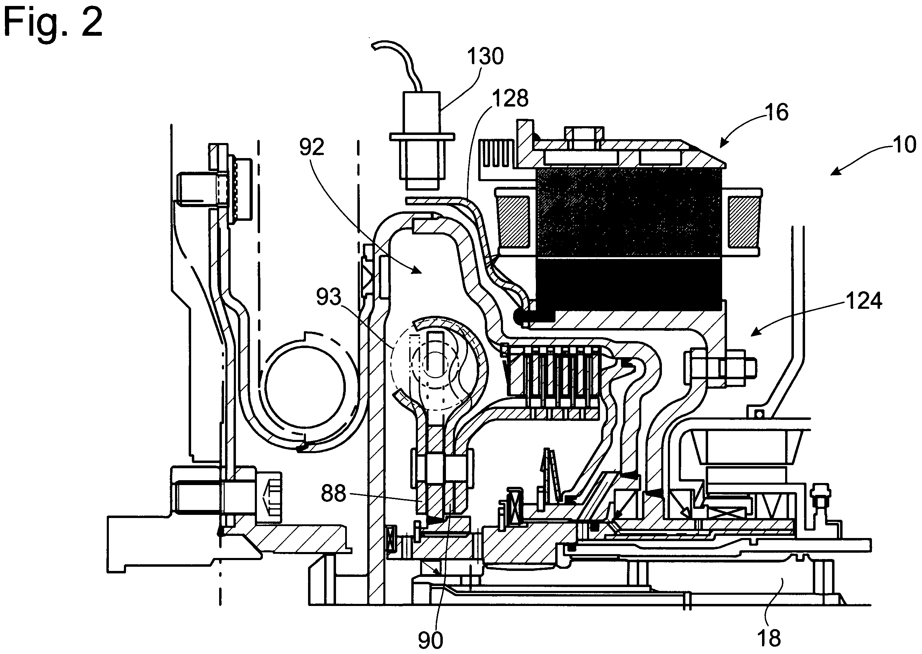

Eine Abwandlung des vorangehend beschriebenen Hybridmoduls 10 ist in Fig. 2 gezeigt. Hinsichtlich des grundsätzlichen Aufbaus und der eingesetzten Komponenten besteht in wesentlichen Bereichen Übereinstimmung. Es wird im Folgenden daher lediglich auf die vorhandenen Unterschiede eingegangen. Zunächst erkennt man, dass die Torsionsschwingungsdämpferanordnung 92 radial etwas kürzer gebaut ist, d.h., die Deckscheibenelemente 88, 90 sich nicht so weit nach radial außen erstrecken, wie bei der vorangehend beschriebenen Ausgestaltungsvariante und auch die Dämpferelementenanordnung 93 etwas weiter radial innen liegt. Es sei hier darauf hingewiesen, dass die konkrete technische Ausführung und auch Dimensionierung der Torsionsschwingungsdämpferanordnung 92 selbstverständlich von den zu übertragenden Drehmomenten und den zu erwartenden und zu bedämpfenden Drehungleichförmigkeiten abhängen wird.

Mit der Rotoranordnung 124 der Elektromaschine 16 ist ein Impulsgeberelement 128 drehfest verbunden, das einem Sensor 130 gegenüberliegend endet. Das Impulsgeberelement 128 kann beispielsweise durch eine Verzahnungsformation oder Einprägungen strukturiert sein, deren Vorbeibewegung der Sensor 130 aufnimmt, so dass das Signal vom Sensor 130 als Indikator für die Drehzahl der Rotoranordnung 124 und mithin auch der Abtriebswelle 18 genutzt werden kann.

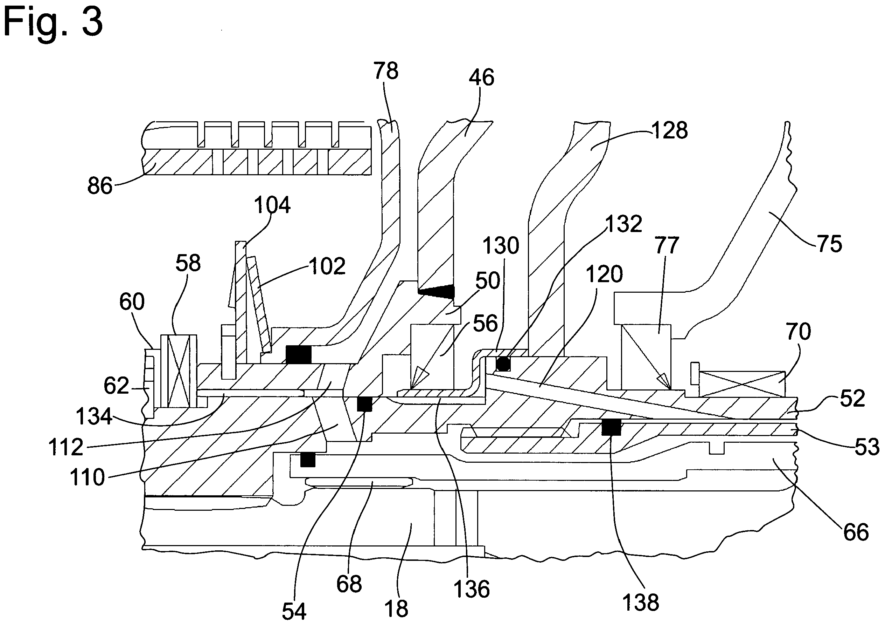

Eine weitere Abwandlung ist in Fig. 3 gezeigt. Man erkennt hier, dass am Außenumfangsbereich der Abtriebsnabe 52 eine aus Blechmaterial oder dergleichen geformte Stützhülse 130 aufgepresst ist und mittels eines beispielsweise als O-Ring ausgebildeten Dichtelements 132 bezüglich der Abtriebsnabe 52 abgedichtet ist. Weiterhin ist das Dichtelement 56 auf den Bereich der Hülse 130 mit geringerem Durchmesser aufgesetzt und stellt somit eine Abdichtung zwischen dieser Hülse 130 und dem Gehäuseteil 50 her. Man erkennt weiter, dass das Gehäuseteil 50 über ein beispielsweise als Gleitlager 134 ausgebildetes Lager radial bezüglich der Abtriebsnabe 52 gelagert ist.

Der Leckagekanal 120 verläuft schräg zwischen einem zwischen der Abtriebsnabe 52 und der Hülse 130 gebildeten Raumbereich in Richtung auf das getriebegehäuseseitige Ende der Abtriebsnabe 52 zu und nach radial innen. Um den Leckagekanal 120 in Verbindung zu bringen mit dem zwischen den beiden Dichtelementen 54 und 56 gebildeten Raumbereich sind am Außenumfang der Abtriebsnabe 52 nutartige Einsenkungen 136 vorgesehen, welche den Bereich der Hülse 130 mit geringerem Durchmesser überbrücken. Die Abtriebsnabe 52 ist hier zweiteilig ausgebaut und weist unter Belastung eines spaltartigen Zwischenraums, in welchem der Leckagekanal 120 offen ist, ein durch eine Verzahnungsformation drehgekoppeltes zusätzliches radial inneres Nabenteil 53 auf. Der spaltartige Zwischenraum ist durch ein Dichtungselement 138 axial dicht abgeschlossen.

Man erkennt in Fig. 3 deutlich, dass die Stützwelle 66 sowohl zur Lagerung bzw. Abstützung der Getriebeeingangswelle bzw. Abtriebswelle 18, nämlich über das Gleitlager 68, dient, als auch zur Begrenzung bzw. Abdichtung verschiedener Kanäle für die in den Innenraum 48 des Kupplungsgehäuses 42 einzuleitende bzw. von dort abzuziehende Flüssigkeit. Es sei darauf hingewiesen, dass selbstverständlich auch an anderen Positionierungen Dichtungen bzw. Lagerungen vorgesehen sein können bzw. dass die Dichtungsfunktionalität auch durch Lagerformationen, wie z.B. Gleitlagerringe oder dergleichen, übernommen werden kann.

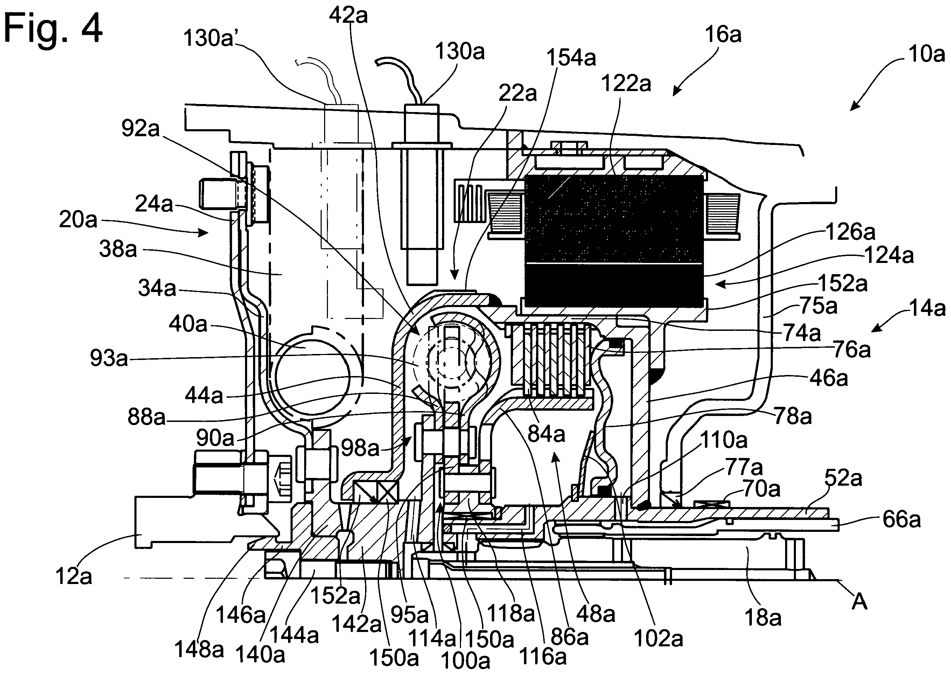

Eine alternative Ausgestaltungsform eines Hybridmoduls ist in Fig. 4 gezeigt. Komponenten, welche hinsichtlich Aufbau bzw. Funktion vorangehend beschriebenen Komponenten entsprechen, sind mit dem gleichen Bezugszeichen unter Hinzufügung des Anhangs "a" bezeichnet.

Bei dieser Ausgestaltungsform ist das scheibenartige Element 34a der Kopplungsanordnung 20a, das ein- oder zweiteilig ausgeführt sein kann, radial innen beispielsweise durch Vernietung verbunden mit einem ersten Übertragungselement 140a. Dieses beispielsweise mit Hirthverzahnung versehene erste Übertragungselement 140a ist in Drehkopplungseingriff mit einem ebenfalls mit Hirthverzahnung versehenen zweiten Übertragungselement 142a. Eine feste Verbindung zwischen diesen beiden Elementen 140a, 142a erfolgt durch einen Schraubbolzen 144a und ein Pressstück 146a, das gleichzeitig auch einen Ansatz 148a zur Lagerung bezüglich der Antriebswelle 12a bzw. eines damit fest verbundenen Zentrierstücks aufweist.

Das zweite Übertragungselement 142a erstreckt sich in das bzw. im Wesentlichen in dem Gehäuse 42a der Lamellenkupplung 22a und ist bezüglich diesem durch ein Lager 150a axial bzw. auch radial abgestützt und durch ein Dichtelement 152a fluiddicht abgeschlossen. Das zweite Übertragungselement 142a ist durch Nietbolzen mit den beiden Deckscheibenelementen 88a, 90a fest verbunden, wobei die hierfür eingesetzten Nietbolzen gleichzeitig auch als Distanzstücke und als Drehwinkelbegrenzungselemente dienen können. Die beiden Deckscheibenelemente 88a, 90a bilden im Wesentlichen wieder die Primärseite 98a der Torsionsschwingungsdämpferanordnung 92a. Das Zentralscheibenelement 95a bildet im Wesentlichen die Sekundärseite 100a und ist durch Nietverbindung mit der Torsionsschwingungsdämpferanordnungsnabe 118a einerseits und dem Lamellenträger 86a des Lamellenpakets 84a andererseits verbunden. Bei Drehmomenteinleitung von der Antriebswelle 12a her bildet also im Wesentlichen die Torsionsschwingungsdämpferanordnung 92a mit dem Lamellenpaket 84a den Eingangsbereich der Lamellenkupplung 22a, so dass in diesem Falle die Lamellen des Lamellenpakets 84a als antriebsseitige Lamellen zu betrachten sind.

Das mit seinem Bereich 74a als Lamellenträger für das abtriebsseitige Lamellenpaket 76a eingesetzte Gehäuseteil 46a des Gehäuses 42a ist radial innen durch Verschweißung mit der Abtriebsnabe 52a fest verbunden. Es bildet also das Gehäuse 42a der Lamellenkupplung 22a mit dem daran drehfest gehaltenen Lamellenpaket 76a im Wesentlichen den Ausgangsbereich der Lamellenkupplung 22a. Man erkennt, dass die Öffnungen 114a bzw. 116a zum Einführen bzw. Abziehen von Flüssigkeit in den Innenraum 48a im zweiten Übertragungselement 142a einerseits bzw. der Abtriebsnabe 52a andererseits ausgebildet sind und dass die Torsionsschwingungsdämpferanordnungsnabe 118a über ein Lager 150a an der Abtriebsnabe 52a radial gelagert ist. Die Abtriebsnabe 52a ist wieder in Verzahnungseingriff mit der Abtriebswelle 18a. Über die Öffnung 110a in der Abtriebsnabe 52a kann die zum Beaufschlagen des Kolbens 78a erforderliche Druckerhöhung in dem zwischen dem Kolben 78a und dem Gehäuseteil 46a gebildeten Raumbereich erzeugt werden.

Es sei hier darauf hingewiesen, dass vor allem im Bereich der Lagerung und Abdichtung des Gehäuses 42a bezüglich des zweiten Übertragungselements 142a ein ähnlicher Aufbau vorgesehen sein kann, wie in Fig. 1 im Bereich der Abdichtung des Gehäuses bezüglich der Abtriebsnabe. Auch hier könnte eine zweistufige Abdichtung realisiert sein.

Weiter erkennt man, dass das zweite Übertragungselement 142a radial innen geschlossen, also nicht mit Öffnungen versehen ist, so dass hier keine zusätzliche Abdichtung notwendig ist. Erforderlichenfalls könnte dieses Bauteil radial innen offen sein und müsste dann mit einem Dichtelement versehen werden.

Man erkennt in Fig. 4 weiter, dass das Gehäuse 42a, insbesondere das Gehäuseteil 46a, gleichzeitig auch die Funktionalität des Trägers für die Rotoranordnung 124a der Elektromaschine 16a übernimmt. D.h., die Rotoranordnung 124a ist mit einem den Wechselwirkungsbereich 126a tragenden ringartigen Bauteil 152a außen auf das Gehäuse 42a aufgesetzt und beispielsweise durch Kleben, Schweißen, Schrumpfen oder dergleichen damit fest verbunden. Weiterhin könnte zum Erhöhen der Dichtsicherheit dieses Bauteil 152a auch mit dem Gehäuseteil 44a verbunden, beispielsweise verschweißt sein. Andererseits könnte auch das Gehäuseteil 44a das Bauteil 52a ersetzen bzw. zumindest teilweise ersetzen und somit als Träger für den Wechselwirkungsbereich 126a dienen. Hierfür kann das Gehäuseteil 44a, ebenso wie das Gehäuseteil 46 aus geeignetem Material, wie z.B. Stahl oder dergleichen, aufgebaut sein.

Durch die feste und somit auch dichte Anbindung des Gehäuseteils 46a radial innen an die Abtriebsnabe 52a ist gleichzeitig auch der fluiddichte Abschluss des Innenraums 48a an dieser axialen Seite realisiert, so dass hier keine zusätzlichen Dichtungsbaugruppen erforderlich sind. Man erkennt weiter, dass am Außenumfangsbereich des Gehäuses 42a, nämlich des Gehäuseteils 44a, eine durch Verzahnung, oder Einprägung gebildete Wechselwirkungsformation 154a für den radial außerhalb davon angeordneten Sensor 130a bereitgestellt sein kann. In einer alternativen Positionierung, kann der mit 133a' bezeichnete Sensor so positioniert sein, dass er zumindest teilweise außerhalb und sich axial überlappend mit der Radantriebswelle 40a liegt.

Auch bei dieser Ausgestaltungsform hat die Stützwelle 66a unter anderem die Funktionalität, die verschiedenen Flüssigkeitsströmungswege zum Zuführen und Abführen von Flüssigkeit in die Lamellenkupplung 22a mitzubegrenzen bzw. abzudichten.

Bei der in Fig. 4 gezeigten Ausgestaltungsform ist derjenige Bereich der Lamellenkupplung 22a, welcher allgemein das größere Massenträgheitsmoment aufweist, nämlich das Gehäuse 42a mit den damit drehfest gekoppelten Baugruppen, bezüglich der Antriebswelle 12a abtriebsseitig angeordnet, so dass im Vergleich zur vorangehend mit Bezug auf die Fig. 1 beschriebenen Ausgestaltungsform hier auf der Seite der Antriebswelle 12a ein geringeres Massenträgheitsmoment vorhanden ist. Dies kann insbesondere bei Impulsstartvorgängen vorteilhaft sein, da auf diese Art und Weise eine höhere Drehbeschleunigung der Antriebswelle 12a erzielt werden kann. Soll im Bereich der Antriebswelle 12a das Massenträgheitsmoment erhöht werden, so kann dies beispielsweise durch einen zusätzlichen Massering erfolgen, der beispielsweise radial außen mit der Kopplungsanordnung 20a verbunden sein kann. Die Masse bzw. das Massenträgheitsmoment eines derartigen Masserings kann dann selbstverständlich auf die hinsichtlich der Schwingungsauslegung bestehenden Anforderungen angepasst sein.

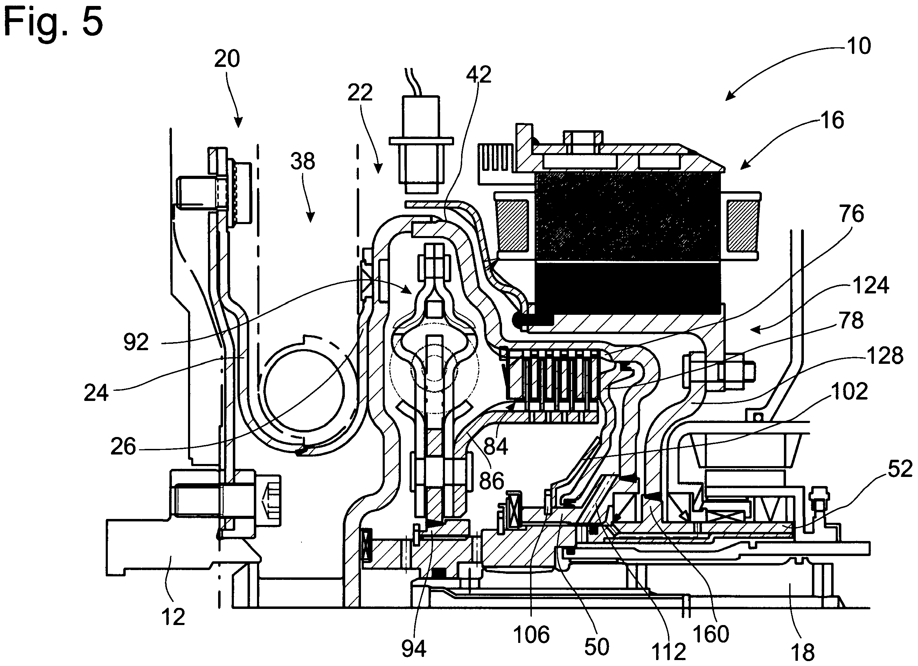

In Fig. 5 ist eine weitere Ausgestaltungsform eines Hybridmoduls 10 gezeigt. Dieses entspricht in weiten Bereichen der vorangehend mit Bezug auf die Fig. 2 beschriebenen Ausgestaltungsform, so dass auf die diesbezüglichen Ausführungen zur Fig. 2 und selbstverständlich auch zur Fig. 1 verwiesen werden kann.

Man erkennt bei der in Fig. 5 gezeigten Ausgestaltungsvariante, dass an der Abtriebsnabe 52 ein radialer Ansatz 160 vorgesehen ist, an welchem der Träger 128 der Rotoranordnung 124 durch Verschweißung festgelegt ist. Da bei dieser Ausgestaltungsform also die Verschweißung in einem etwas weiter radial außen liegenden Bereich der Abtriebsnabe 52 erfolgt, besteht nicht die Gefahr, dass deren Fertigungsgenauigkeit insbesondere in denjenigen Bereichen, in welchen sie durch Lager bzw. Dichtungselemente in Wechselwirkung mit anderen Bauteilen steht, beeinträchtigt wird.

Weiterhin erkennt man, dass im Gehäuseteil 50 diejenige Öffnung, über welche Fluid zum Verschieben des Kolbens 78 zu bzw. abgeführt wird, nämlich die Öffnung 112, in dem radial etwas dicker gestalteten Bereich des Gehäuseteils 50 liegt und somit dieses Fluid weiter nach radial außen leitet. Auch die Beaufschlagung des Kolbens 78 durch die Tellerfeder 102 erfolgt weiter radial außen, nämlich näherungsweise im radial mittleren Bereich des ringartigen Kolbens 78. Dort stützt sich die Tellerfeder 102 am Kolben 78 ab. Radial innen stützt sich die Tellerfeder 102 dann am Sicherungsring 106 und über dieses am Gehäuseteil 50 ab.

Ebenso wie bei den Ausgestaltungsformen der Fig. 1 und 2 wird bei dieser in Fig. 5 gezeigten Ausgestaltungsform das Drehmoment über die Kopplungsanordnung 20, also die beiden scheibenartigen Elemente 24, 26 derselben, auf das Gehäuse 42 übertragen. Das erste Lamellenpaket 76 überträgt das Drehmoment dann weiter über das zweite Lamellenpaket 84 und den Lamellenträger 86 auf die Torsionsschwingungsdämpferanordnung 92. Über diese bzw. die Torsionsschwingungsdämpfernabe 94 und die damit drehfest gekoppelte Abtriebsnabe 52 gelangt das Drehmoment dann zur Getriebeeingangswelle 18. Bei Antrieb durch die Elektromaschine 16 wird das Antriebsdrehmoment direkt in die Abtriebsnabe 52 und über diese in die Getriebeeingangswelle 18 eingeleitet.

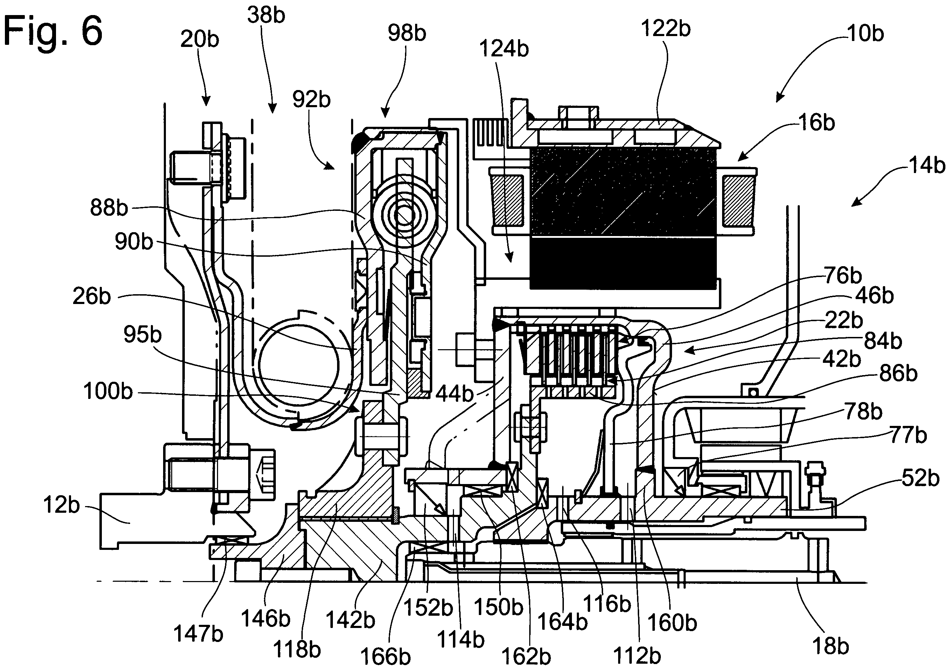

Ein weiteres Hybridmodul 10 ist in Fig. 6 gezeigt. Hier sind Komponenten, die hinsichtlich Aufbau bzw. Funktion vorangehend bereits beschriebenen Komponenten entsprechen, mit dem gleichen Bezugszeichen unter Hinzufügung eines Anhangs "b" bezeichnet.

Der elementare Unterschied zu den vorangehend beschriebenen Ausgestaltungsformen besteht darin, dass die Torsionsschwingungsdämpferanordnung 92b außerhalb des Gehäuses 42b angeordnet ist. Die Torsionsschwingungsdämpferanordnung 92b liegt also axial zwischen der Kopplungsanordnung 20b bzw. dem Raumbereich 38b und der Elektromaschine 16b. Die beiden Deckscheibenelemente 88b und 90b, welche im Wesentlichen die Primärseite 98b bereitstellen, sind im Bereich des Deckscheibenelements 88b mit der Kopplungsanordnung 20b, nämlich dem scheibenartigen Element 26b derselben, durch Vernietung oder dergleichen verbunden. Die Sekundärseite 100b, nämlich deren Zentralscheibenelement 95b, ist radial innen über die Torsionsschwingungsdämpfernabe 118b mit dem Übertragungselement 142b drehfest verbunden. Dieses Übertragungselement 142b kann wiederum über das Spannelement 146, ggf. unter Zwischenanordnung eines Pilotlagers 147b, an der Antriebswelle 12b radial abgestützt sein.

Das Übertragungselement 142b erstreckt sich in das Gehäuse 42b der Lamellenkupplung 22b und ist dort mit dem Lamellenträger 86b durch Vernietung fest verbunden. Über das Lager 150b ist das Übertragungselement 142b am Gehäuse 42b radial gelagert. Ferner sorgt ein Dichtelement 152b für einen dichten Abschluss des Gehäuses 42b. Es ist weiterhin ein Lager 162b vorgesehen, über welches das Übertragungselement 142b axial in Richtung auf die Antriebswelle 12b zu am Gehäuse 42b abgestützt ist.

Im Gehäuse 42b ist das Übertragungselement 142b mit dem Lamellenträger 86b des Lamellenpakets 84b gekoppelt. Dieses Lamellenpaket 84b ist nunmehr das antriebsseitige Lamellenpaket. Das Lamellenpaket 76b, das mit dem Gehäuseteil 46b des Gehäuses 42b drehfest gekoppelt ist, ist das abtriebsseitige Lamellenpaket, über welches das Antriebsdrehmoment dann über das Gehäuse 42b weiter in die Abtriebsnabe 52b geleitet werden kann. Diese ist über ein Lager 164b nunmehr axial am Übertragungselement 142b abgestützt und in Drehkopplungseingriff mit der Abtriebswelle bzw. Getriebeeingangswelle 18b. Diese wiederum ist über ein Lager 166b ebenfalls am Übertragungselement 142b radial gelagert.

Die Fluideinleitung bzw. Fluidableitung in das bzw. aus dem Gehäuse 42b erfolgt nunmehr über die Öffnung 114b im Übertragungselement 142b und die Öffnung 116b in der Abtriebsnabe 52b. Die Fluideinleitung bzw. Ableitung zum Bewegen des Kolbens 78b erfolgt über die Öffnung 112b in der Abtriebsnabe 52. Diese weist wiederum den radialen Ansatz 160b auf, an dem nunmehr jedoch das Gehäuseteil 46b des Gehäuses 42b festgelegt ist. Die Rotoranordnung 124b der Elektromaschine 16b ist mit dem Gehäuse 42b durch Verschraubung verbunden. Man erkennt, dass selbstverständlich das Gehäuse 42b hier auch direkt den Rotorträger bilden könnte.

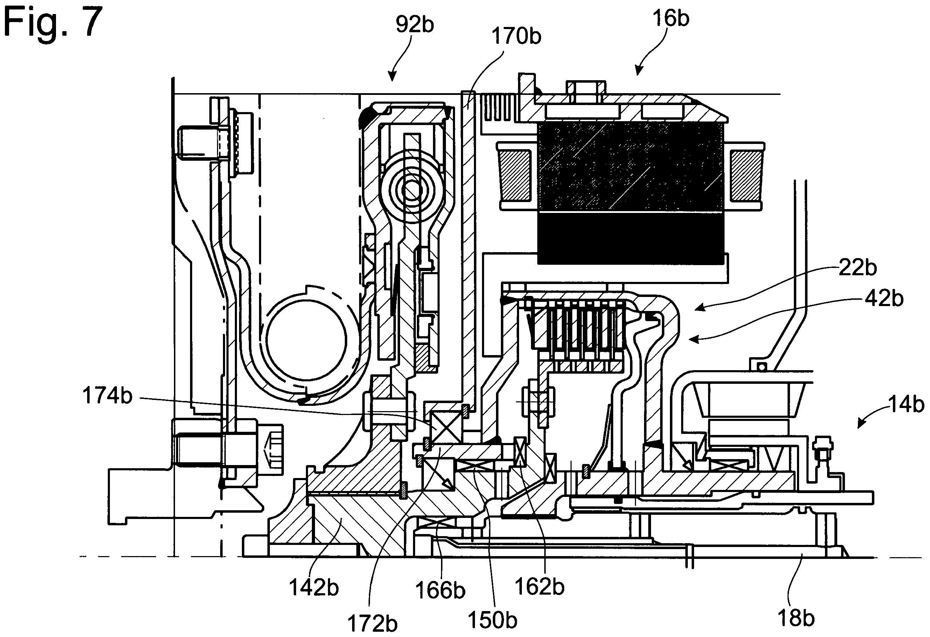

Eine abgewandelte Ausgestaltungsform der in Fig. 6 gezeigten Variante ist in Fig. 7 gezeigt. Man erkennt hier ein Radialstützelement 170b, das im Wesentlichen radial sich erstreckend zwischen der Torsionsschwingungsdämpferanordnung 92b und der Elektromaschine 16b liegt und sich nach radial innen bis an einen zylinderartigen Fortsatz 172b des Gehäuses 42b der Lamellenkupplung 22b heran erstreckt. An diesem zylinderartigen Fortsatz 172b ist über das Lager 162b auch das Übertragungselement 142b axial abgestützt, bzw. ist über das Lager 150b radial abgestützt. Das Radialstützelement 170b, das in seinem radial äußeren Bereich an einer Getriebeglocke oder dergleichen fest getragen sein kann, stützt über ein Lager 174b das Gehäuse 42b und somit über das Lager 150b auch das Übertragungselement 142b. Da an diesem Übertragungselement 142b über das Lager 166b auch die Abtriebswelle 18b radial gelagert ist, ist somit im Wesentlichen für alle im Drehmomentenfluss liegende Teile für eine definierte radiale Abstützung gesorgt.

In Fig. 8 ist eine weitere Ausgestaltungsform eines Hybridmoduls gezeigt. Hierzu sind Komponenten, welche vorangehend beschriebenen Komponenten hinsichtlich Aufbau bzw. Funktion entsprechen, mit dem gleichen Bezugszeichen unter Hinzufügung des Anhangs "c" bezeichnet.

Man erkennt in Fig. 8, dass auch bei dieser Ausgestaltungsform die Torsionsschwingungsdämpferanordnung 92c außerhalb des Gehäuses 42c der Lamellenkupplung 22c angeordnet ist. Die Sekundärseite 100c der Torsionsschwingungsdämpferanordnung 92c, nämlich das Zentralscheibenelement 95c, ist radial innen mit dem Übertragungselement 142c durch Verzahnungseingriff oder dergleichen zur gemeinsamen Drehung um die Drehachse A gekoppelt. Für definierte axiale Positionierung sorgt wieder das Spannelement 146c. Das Übertragungselement 142c ist nunmehr mit dem motorseitig positionierten Gehäuseteil 44c des Gehäuses 42c durch Verschweißung fest verbunden. Zwischen diesem Gehäuseteil 44c und der Torsionsschwingungsdämpferanordnung 42c erstreckt sich radial innen wieder das Radialabstützelement 170c.

Das antriebsseitige und mit dem Gehäuseteil 44c drehfest gekoppelte Lamellenpaket 76c kann durch den nunmehr motorseitig positionierten Kolben 78c in Reibeingriff mit dem Lamellenpaket 84c gebracht werden, das nunmehr das antriebsseitige Lamellenpaket ist. Der Lamellenträger 86c, der hier mehrteilig ausgeführt ist, erstreckt sich nach radial innen bis zur Abtriebsnabe 52c und ist mit dieser in Kämmeingriff. Radial innen ist der Lamellenträger 86c in axialer Richtung über das Lager 162c am Übertragungselement 142c und somit auch bezüglich des Gehäuses 42c abgestützt. An diesem Übertragungselement 142c ist nunmehr auch über den Sicherungsring 106c die Tellerfeder 102c axial abgestützt, welche den Kolben 78c in Richtung Ausrücken vorspannt. Die Abtriebsnabe 52c ist über ein Lager 180c nunmehr in radialer Richtung an dem mit dem Gehäuseteil 46c fest verbundenen Gehäuseteil 50c abgestützt.

Eine im Übertragungselement 142c ausgebildete Kanalanordnung führt zu einer Öffnung 178c, über welche das zum Verschieben des Kolbens 78c erforderliche Fluid eingeleitet bzw. abgezogen werden kann. Die Versorgung kann über eine in der Abtriebswelle 18c zentral vorgesehene Bohrung erfolgen.

Da auch bei dieser Ausgestaltungsvariante die Torsionsschwingungsdämpferanordnung 92c in Antriebsrichtung vor der Lamellenkupplung 22c und mithin den Lamellenpaketen 76c, 84c liegt und somit ein im Wesentlichen geglättetes Antriebsdrehmoment in die Lamellenkupplung 22c eingeleitet werden kann, muss diese im Allgemeinen weniger hohe Drehmomentenspitzen übertragen, so dass die Anzahl der Lamellen der verschiedenen Lamellenpakete 76c, 84c reduziert werden kann und somit eine axial kürzer bauende Anordnung erzeugt werden kann. Es sei noch darauf hingewiesen, dass bei der in Fig. 8 gezeigten Ausgestaltungsvariante die Rotoranordnung 124c über den Träger 128c direkt an der Abtriebsnabe 52c durch Verschweißung festgelegt ist und somit über die Abtriebsnabe 52c mit der Abtriebswelle 18c gekoppelt ist.

Es ist selbstverständlich, dass bei der in Fig. 8 gezeigten Variante nicht notwendigerweise das Radialabstützelement 170c vorgesehen sein muss. Beispielsweise könnte die definierte radiale Abstützung auch über eine Anordnung erfolgen, wie sie beispielsweise in Fig. 6 gezeigt ist, also durch Radialabstützung über das Spannelement 146c an der Antriebswelle 12c, ggf. über ein Pilotlager.

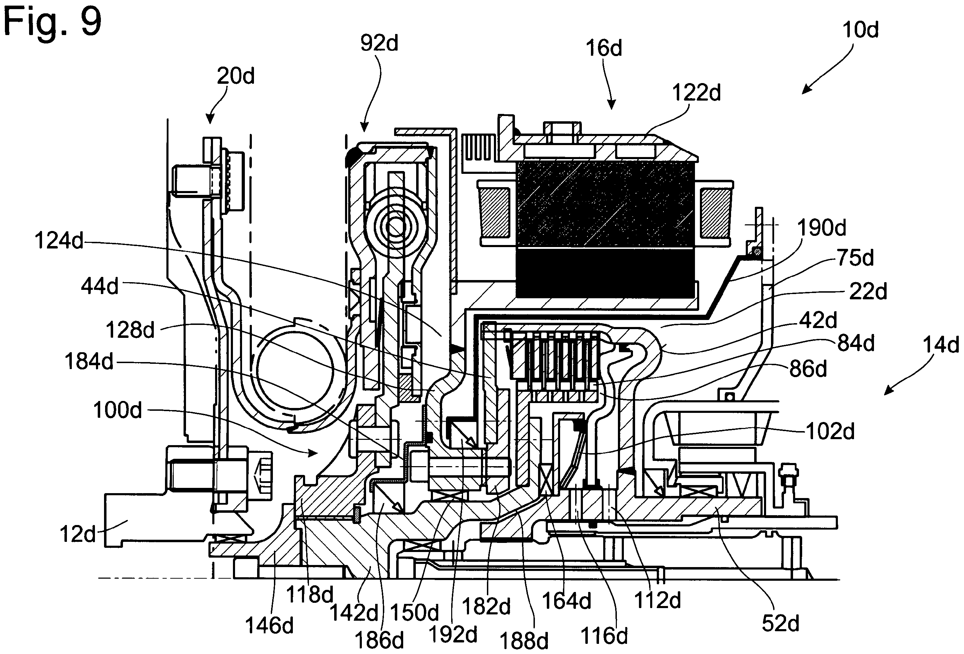

Eine weitere Ausgestaltungsform eines Hybridmoduls ist in Fig. 9 gezeigt. Dort vorgesehene Bauteile sind, sofern in Aufbau bzw. Funktion übereinstimmend, mit dem gleichen Bezugszeichen wie vorangehend bezeichnet, jedoch unter Hinzufügung des Anhangs "d". Man erkennt, dass auch hier wieder die Sekundärseite 100d der außerhalb des Gehäuses 42d liegenden Torsionsschwingungsdämpferanordnung 92d über die Torsionsschwingungsdämpfernabe 118d drehfest mit dem Übertragungselement 142d gekoppelt ist. Dieses ist über das Bauteil bzw. Spannelement 146d und ein Pilotlager an der Antriebswelle 12d radial gelagert. Insofern ist nicht notwendigerweise eine weitere radiale Abstützung, beispielsweise durch ein Radialabstützelement, erforderlich.

Das Übertragungselement 142d greift in das Gehäuse 42d der Lamellenkupplung 22d ein und ist dort beispielsweise durch Verschraubung mit dem Lamellenträger 86d des nunmehr wieder antriebsseitigen Lamellenpakets 84d fest verbunden. Der Träger 128d der Rotoranordnung 124d kann hier als Bestandteil des Gehäuses 42d betrachtet. Man erkennt, dass der Träger 128d über ein Gehäuseteil 182d mit dem motorseitigen Gehäuseteil 44d fest verbunden ist. Auf der radial inneren Seite des Trägers 128d ist das Übertragungselement 142d über das Lager 150d radial abgestützt. Am Träger 128d ist ferner ein beispielsweise aus Blechmaterial geformtes Abschlusselement 184d festgelegt, welches radial innen in Verbindung mit einem Dichtungselement 186d einen fluiddichten Abschluss zwischen dem Träger 128d und dem Übertragungselement 142d realisiert.

Die Abtriebsnabe 52d ist axial über das Lager 164d am Übertragungselement 142d abgestützt. Die Fluidzufuhr bzw. Abfuhr zu bzw. von dem Gehäuse 42d erfolgt einerseits über einen zwischen dem Übertragungselement 142d und der Abtriebsnabe 52d gebildeten spaltartigen Zwischenraum 188d und andererseits über die in der Abtriebsnabe 52d vorgesehene Öffnung 116d.

Man erkennt in Fig. 9 weiter, dass die Lamellenkupplung 22d umgebend ein gehäuseartiges Abschlusselement 190d vorgesehen ist, das sich in dem zwischen der Elektromaschine 16d und der Lamellenkupplung 22d gebildeten Zwischenraum erstreckt und über ein Dichtelement 192d bezüglich des Trägers 128d und somit des Gehäuses 42d dicht abgeschlossen ist. Auch im Bereich der Anbindung an ein Kupplungsgehäuse 75d ist ein im Wesentlichen dichter Abschluss realisiert, so dass die Lamellenkupplung 22d hier im Wesentlichen vollständig eingekapselt ist. Dies bedeutet, dass die Lamellenkupplung 22d bzw. das Gehäuse 42d nicht vollständig abgekapselt sein muss. Vielmehr erzielen die beiden Elemente 190d und 184d eine vollständige Einkapselung der gesamten Lamellenkupplung 22d, so dass diese offen bzw. durchströmbar ausgebildet sein kann. Dies macht es jedoch erforderlich, dass in den zwischen dem Element 190d und dem Gehäuse 42d gebildeten Zwischenraum sich ansammelndes Fluid von dort auch wieder abgezogen und in den Fluidkreislauf zurückgeführt werden muss.

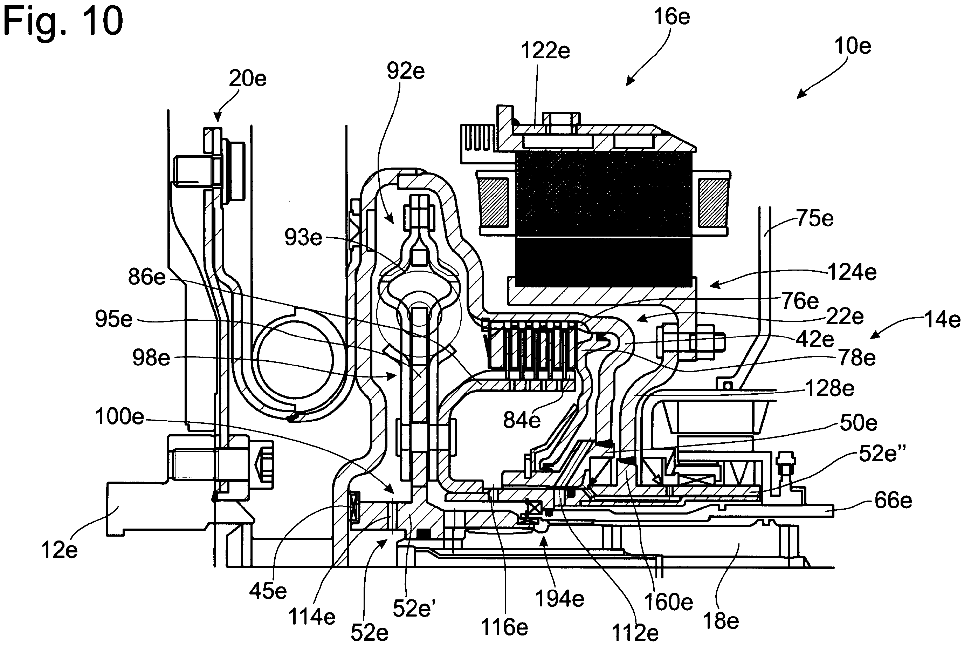

Eine weitere Ausgestaltungsform eines Hybridmoduls ist in Fig. 10 gezeigt. Hier sind Komponenten, welche vorangehend beschriebenen Komponenten hinsichtlich Aufbau bzw. Funktion entsprechen, wieder mit dem gleichen Bezugszeichen unter Hinzufügung eines Anhangs "e" bezeichnet.

Man erkennt in Fig. 10 zunächst, dass die Torsionsschwingungsdämpferanordnung 92e wieder im Gehäuse 42e der Lamellenkupplung 22e angeordnet ist. Ähnlich wie bei der Ausgestaltungsform gemäß Fig. 1 liegt die Torsionsschwingungsdämpferanordnung 22e axial folgend auf die Elektromaschine 16e und überlappt sich mit dieser radial, während die Lamellenpakete 76e und 84e in einem Bereich liegen, der radial von der Elektromaschine 16e umgeben ist. Die Primärseite 98e der Torsionsschwingungsdämpferanordnung 92e ist mit dem Lamellenträger 86e des abtriebsseitigen Lamellenpakets 84e fest verbunden, so dass ein von der Antriebswelle 12e eingeleitetes Drehmoment über das Gehäuse 42e und die beiden Lamellenpakete 76e, 84e, den Lamellenträger 84e und die Primärseite 98e über die Dämpferelementenanordnung 93e auf das Zentralscheibenelement 95e der Sekundärseite und von diesem hier direkt in einen ersten Teil 52e' der Abtriebsnabe 52e eingeleitet wird. Dieser erste Teil 52e' der Abtriebsnabe 52e ist über das Lager 45e axial am Gehäuse 42e abgestützt und ist weiterhin mit der Abtriebswelle bzw. Getriebeeingangswelle 18e in Drehkopplungseingriff. Dieser Teil 52e' weist weiterhin die Öffnung 114e zum Einleiten oder Abziehen von Fluid auf.

Ein zweiter Teil 52e" der Abtriebsnabe 52e, welcher sich auch in das Getriebegehäuse 75e hinein erstreckt, trägt mit seinem radialen Ansatz 160e den Träger 128e der Rotoranordnung 124e und dient weiterhin insbesondere auch in Verbindung mit der Stützwelle 66e der Fluidzufuhr in das Gehäuse 42e, um den Kolben 78e verschieben zu können. Dieser zweite Teil 52e" ist mit dem ersten Teil 52e' jedoch nicht fest verbunden, sondern beispielsweise über eine Lager-/Dichtungsanordnung 194e fluiddicht gelagert. Er weist, wie bereits angesprochen, Öffnungen 116e bzw. 112e zur Fluidzufuhr bzw. zur Fluidabfuhr auf. An seinem im Gehäuse 42e liegenden axialen Ende ist dieser zweite Teil 52e" der Abtriebsnabe 52e mit dem Lamellenträger 86e beispielsweise durch Verzahnungsformationen in Drehkopplung, so dass auch die Rotoranordnung 124e an die Primärseite 98e der Torsionsschwingungsdämpferanordnung 92e angebunden ist. Dies bedeutet, dass auch dann, wenn der Antrieb über die Elektromaschine 16e erfolgt, der Drehmomentenfluss über die Torsionsschwingungsdämpferanordnung 92e zur Abtriebswelle 18e verläuft und somit Drehschwingungen gedämpft werden können.

Ansonsten entspricht diese Ausgestaltungsform im Wesentlichen auch den mit Bezug auf die Fig. 1, 2 und 5 beschriebenen Ausgestaltungsformen, so dass auf die voranstehenden Ausführungen verwiesen wird.

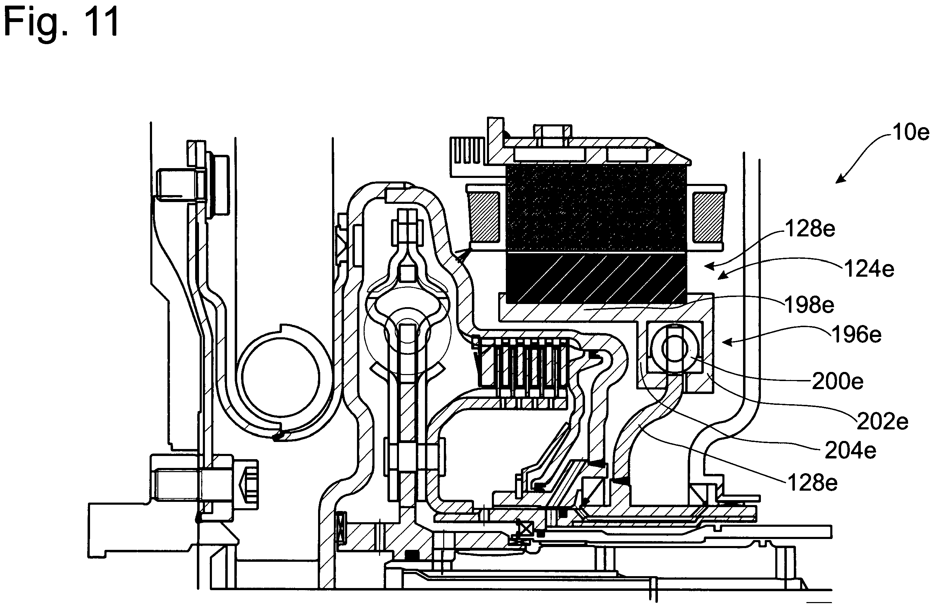

Bei der in Fig. 11 gezeigten Abwandlung der vorangehend mit Bezug auf die Fig. 10 beschriebenen Ausgestaltungsform ist eine weitere Torsionsschwingungsdämpferanordnung 196e an der Rotoranordnung 124e vorgesehen. Diese überträgt das Drehmoment von dem den Wechselwirkungsbereich 128e der Rotoranordnung 124e unmittelbar tragenden, im Wesentlichen zylindrisch gebildeten Bauteil bzw. Joch 198e auf den Träger 128d. Auch diese Torsionsschwingungsdämpferanordnung 196e ist selbstverständlich mit einer Dämpferelementenanordnung 200e ausgeführt. An dem Bauteil 198e können deckscheibenelementenartige Ansätze 202e und 204e vorgesehen sein, zwischen welche der Träger 128e als Zentralscheibenelement eingreift.

Es ist selbstverständlich, dass verschiedene der in den Figuren dargestellten und vorangehend beschriebenen Bauteile bzw. Baugruppen nur als beispielhaft zu betrachten sind und in verschiedener Weise variiert werden können. So kann selbstverständlich der Torsionsschwingungsdämpfer mehrere, ggf. auch radial ineinander gestaffelte Federpakete als Dämpferelementenanordnung umfassen, um eine entsprechend ein- oder mehrstufige Kennlinie bereitzustellen. Die Drehwinkelbegrenzungsfunktionalität für die Torsionsschwingungsdämpferanordnung kann durch die gezeigten und auch als Distanzstücke eingesetzten Nietbolzen realisiert sein, kann jedoch auch durch entsprechende Wechselwirkung der Deckscheibenelemente mit dem Zentralscheibenelement realisiert sein. Die Dämpferelemente, im Allgemeinen Federn, der Dämpferelementenanordnung können geradlinig sich erstreckend oder gekrümmt ausgebildet bzw. in den dafür bereitgestellten Bauraum eingegliedert sein. Insbesondere in der in Fig. 1 dargestellten Ausgestaltungsform bzw. den Variationen der Fig. 2 und 3 hierzu kann der Rotorträger, je nach Anforderung und gewünschter Formgebung, einstückig oder mehrstückig ausgebildet sein. Die Zuführung bzw. Abführung der Flüssigkeit zur bzw. von der Lamellenkupplung über die Abtriebsnabe, die Stützwelle und die Abtriebswelle kann durch in diesen Bauteilen jeweils vorgesehene Aussparungen, Nuten und Öffnungen erfolgen, die durch erforderlichenfalls eingesetzte Hülsen dann beispielsweise nach radial innen abgeschlossen werden, um Fluidverluste vermeiden zu können.

Es ist ferner selbstverständlich, dass vor allem auch hinsichtlich der Radialabstützung verschiedene Ausgestaltungsformen kombiniert werden können. So kann bei Ausgestaltungsformen, bei welchen kein Radialabstützelement eine definierte radiale Abstützung beispielsweise bezüglich der Getriebeglocke erzeugend dargestellt ist, selbstverständlich ein derartiges Element integriert werden. Andererseits kann selbstverständlich auch bei Bauformen, welchen ein derartiges Radialabstützelement gezeigt ist, alternativ oder zusätzlich die Radialabstützung auch über die Abstützung bezüglich der Antriebswelle erfolgen.

## Patentansprüche

1. Hybridmodul für ein Hybrid-Antriebssystem eines Fahrzeugs, umfassend:
- eine Elektromaschine (16c) mit einer Statoranordnung (122c) und mit einer Rotoranordnung (124c),
- eine nasslaufende Lamellenkupplung (22c) zur wahlweisen Herstellung/Unterbrechung einer Drehmomentübertragungsverbindung zwischen einer um eine Drehachse (A) drehbare Abtriebswelle (18c) und einer Kopplungsanordnung (20c) zur drehfesten Ankopplung an eine Antriebswelle (12c) einer Brennkraftmaschine, wobei die Lamellenkupplung (22c) ein antriebsseitiges Lamellenpaket (76c), ein damit in Reibwechselwirkung bringbares abtriebsseitiges Lamellenpaket (84c) und ein Kupplungsgehäuse (42c) umfasst, welches mit dem antriebsseitigen Lamellenpaket (76c) drehfest gekoppelt ist und wobei das Hybridmodul weiter umfasst
- eine außerhalb des Kupplungsgehäuses (42c) und im Drehmomentübertragungsweg zwischen der Kopplungsanordnung (20c) und der Abtriebswelle (18c) angeordnete Torsionsschwingungsdämpferanordnung (92c), wobei die Primärseite der Torsionsschwingungsdämpferanordnung (92c) über die Kopplungsanordnung (20c) mit der Antriebswelle (12c) zu koppeln ist und die Sekundärseite (100c) der Torsionsschwingungsdämpferanordnung (92c) mittels eines Übertragungselements (142c) mit dem Kupplungsgehäuse (42c) drehfest gekoppelt ist, wobei das Übertragungselement (142c) außerhalb der Antriebswelle (12c) gelagert ist, wobei
- die Rotoranordnung (124c) der Elektromaschine (16c) zur gemeinsamen Drehung mit der Abtriebswelle (18c) drehfest gekoppelt oder zu koppeln ist,
**dadurch gekennzeichnet,**
**dass** die nasslaufende Lamellenkupplung (22c) die Verbindung zwischen der Rotoranordnung (124c) und dem Antriebsaggregat bildet und dass das Kupplungsgehäuse (42c) einen abgeschlossenen Fluid-Innenraum ausbildet.

2. Hybridmodul nach Anspruch 1,
**dadurch gekennzeichnet, dass** die Kopplungsanordnung zwei im Wesentlichen scheibenartige Elemente (24, 26) umfasst, von denen das erstgenannte (24) radial innen mit der Antriebswelle (12) und radial außen mit dem anderen Element (26) verbunden ist.

3. Hybridmodul nach Anspruch 1 oder 2,
**dadurch gekennzeichnet, dass** die Lamellenpakete (76c, 84c) wenigstens bereichsweise in einem von der Elektromaschine (16c) umgebenen Raumbereich angeordnet sind.

4. Hybridmodul nach einem der Ansprüche 1 bis 3,
**dadurch gekennzeichnet, dass** das Kupplungsgehäuse (42a) die Rotoranordnung (124) trägt.

5. Hybridmodul nach einem der Ansprüche 1 bis 4,
**dadurch gekennzeichnet, dass** die Kopplungsanordnung (20; 20a) wenigstens ein Kopplungselement (34; 34a) umfasst, welches einen Aufnahmeraum (38; 38a) zur Hindurcherstreckung einer Radantriebswelle (40; 40a) begrenzt.

6. Hybridmodul nach Anspruch 5,
**dadurch gekennzeichnet, dass** das Kupplungsgehäuse (42; 42a) und der Aufnahmeraum (38; 38a) sich wenigstens bereichsweise radial überlappen.

7. Hybrid-Antriebssystem für ein Fahrzeug, umfassend:
- eine Brennkraftmaschine mit einer Kurbelwelle als Antriebswelle (12c),
- ein Hybridmodul (10c) nach einem der vorhergehenden Ansprüche, wobei das Hybridmodul (10c) vermittels der Kopplungsanordnung (20c) mit der Kurbelwelle (12c) der Brennkraftmaschine gekoppelt ist,
- eine Getriebeanordnung (14c) mit einer die Abtriebswelle (18c) bereitstellenden Getriebeeingangswelle.

8. Hybrid-Antriebssystem nach Anspruch 7,
**dadurch gekennzeichnet, dass** in der Getriebeanordnung (14c) eine Kupplungsanordnung zur wahlweisen Unterbrechung/Herstellung einer Drehmomentübertragungsverbindung zwischen der Getriebeeingangswelle und einer Getriebeausgangswelle vorgesehen ist.

9. Hybrid-Antriebssystem nach Anspruch 7 oder 8,
**dadurch gekennzeichnet, dass** die Abtriebsnabe (52c) eine Getriebeeingangsnabe bildet.

10. Hybrid-Antriebssystem nach Anspruch 9,
**dadurch gekennzeichnet, dass** die Getriebeeingangsnabe eine Pumpennabe bildet oder mit dieser zu einer Einheit zusammengefasst ist.

## Claims

1. Hybrid module for a hybrid drive system of a vehicle, comprising:
- an electric machine (16c) with a stator arrangement (122c) and with a rotor arrangement (124c),
- a wet-running multiplate clutch (22c) for selectively producing/interrupting a torque-transmitting connection between an output shaft (18c), which is rotatable about an axis of rotation (A), and a coupling arrangement (20c) for rotationally conjoint coupling to a drive shaft (12c) of an internal combustion engine, wherein the multiplate clutch (22c) comprises a drive-side plate assembly (76c), an output-side plate assembly (84c) which can be placed in frictional interaction with said drive-side plate assembly, and a clutch housing (42c) which is coupled rotationally conjointly to the drive-side plate assembly (76c), and wherein the hybrid module furthermore comprises
- a torsional vibration damper arrangement (92c) which is arranged outside the clutch housing (42c) and in the torque transmission path between the coupling arrangement (20c) and the output shaft (18c), wherein the primary side of the torsional vibration damper arrangement (92c) is to be coupled by means of the coupling arrangement (20c) to the drive shaft (12c), and the secondary side (100c) of the torsional vibration damper arrangement (92c) is coupled rotationally conjointly by means of a transmission element (142c) to the clutch housing (42c), wherein the transmission element (142c) is mounted outside the drive shaft (12c), wherein
- the rotor arrangement (124c) of the electric machine (16c) is rotationally conjointly coupled, or to be rotationally conjointly coupled, to the output shaft (18c) for conjoint rotation,
**characterized**
**in that** the wet-running multiplate clutch (22c) forms the connection between the rotor arrangement (124c) and the drive assembly, and in that the clutch housing (42c) forms a closed-off fluid interior space.

2. Hybrid module according to Claim 1, **characterized in that** the coupling arrangement comprises two substantially disc-like elements (24, 26), of which the former (24) is connected radially at the inside to the drive shaft (12) and radially at the outside to the other element (26).

3. Hybrid module according to Claim 1 or 2, **characterized in that** the plate assemblies (76c, 84c) are arranged at least regionally in a space region surrounded by the electric machine (16c).

4. Hybrid module according to one of Claims 1 to 3, **characterized in that** the clutch housing (42a) bears the rotor arrangement (124).

5. Hybrid module according to one of Claims 1 to 4, **characterized in that** the coupling arrangement (20; 20a) comprises at least one coupling element (34; 34a) which delimits a receiving space (38; 38a) for the leadthrough of a wheel drive shaft (40; 40a) .

6. Hybrid module according to Claim 5, **characterized in that** the clutch housing (42; 42a) and the receiving space (38; 38a) at least regionally radially overlap.

7. Hybrid drive system for a vehicle, comprising:
- an internal combustion engine having a crankshaft as drive shaft (12c),
- a hybrid module (10c) according to one of the preceding claims, wherein the hybrid module (10c) is coupled by means of the coupling arrangement (20c) to the crankshaft (12c) of the internal combustion engine,
- a gearbox arrangement (14c) having a gearbox input shaft which provides the output shaft (18c) .

8. Hybrid drive system according to Claim 7, **characterized in that**, in the gearbox arrangement (14c), there is provided a coupling arrangement for selectively interrupting/producing a torque-transmitting connection between the gearbox input shaft and a gearbox output shaft.

9. Hybrid drive system according to Claim 7 or 8, **characterized in that** the output hub (52c) forms a gearbox input hub.

10. Hybrid drive system according to Claim 9, **characterized in that** the gearbox input hub forms a pump hub or is combined therewith to form a unit.

## Revendications

1. Module hybride pour un système d'entraînement hybride d'un véhicule, comprenant :
- une machine électrique (16c) avec un agencement de stator (122c) et un agencement de rotor (124c),
- un embrayage à disques humide (22c) pour établir/interrompre de manière sélective une liaison de transfert de couple entre un arbre de prise de force (18c) pouvant tourner autour d'un axe de rotation (A) et un agencement d'accouplement (20c) pour l'accouplement solidaire en rotation à un arbre d'entraînement (12c) d'un moteur à combustion interne, l'embrayage à disques (22c) comprenant un paquet de disques côté entraînement (76c), un paquet de disques côté prise de force (84c) pouvant être amené en interaction de friction avec celui-ci, et un boîtier d'embrayage (42c), qui est accouplé de manière solidaire en rotation au paquet de disques côté entraînement (76c), et le module hybride comprenant en outre :
- un agencement d'amortisseur d'oscillations de torsion (92c) disposé à l'extérieur du boîtier d'embrayage (42c) et disposé dans la voie de transfert de couple entre l'agencement d'accouplement (20c) et l'arbre de prise de force (18c), le côté primaire de l'agencement d'amortissement d'oscillations de torsion (92c) devant être accouplé par le biais de l'agencement d'accouplement (20c) à l'arbre d'entraînement (12c) et le côté secondaire (100c) de l'agencement d'amortisseur d'oscillations de torsion (92c) étant accouplé de manière solidaire en rotation au boîtier d'embrayage (42c) au moyen d'un élément de transfert (142c), l'élément de transfert (142c) étant supporté à l'extérieur de l'arbre d'entraînement (12c),
- l'agencement de rotor (124c) de la machine électrique (16c) étant ou pouvant être accouplé de manière solidaire en rotation à l'arbre de prise de force (18c) en vue d'une rotation commune,
**caractérisé en ce que** l'embrayage à disques humide (22c) forme la liaison entre l'agencement de rotor (124c) et **en ce que** le boîtier d'embrayage (42c) constitue un espace interne de fluide fermé.

2. Module hybride selon la revendication 1,
**caractérisé en ce que** l'agencement d'accouplement comprend deux éléments (24, 26) essentiellement en forme de disque, dont le premier (24) est connecté radialement à l'intérieur à l'arbre d'entraînement (12) et radialement à l'extérieur à l'autre élément (26).

3. Module hybride selon la revendication 1 ou 2,
**caractérisé en ce que** les paquets de disques (76c, 84c) sont disposés au moins en partie dans une région spatiale entourée par la machine électrique (16c) .

4. Module hybride selon l'une quelconque des revendications 1 à 3,
**caractérisé en ce que** le boîtier d'embrayage (42a) porte l'agencement de rotor (124).

5. Module hybride selon l'une quelconque des revendications 1 à 4,
**caractérisé en ce que** l'agencement d'accouplement (20 ; 20a) comprend au moins un élément d'accouplement (34 ; 34a) qui limite un espace de réception (38 ; 38a) pour le passage à travers lui d'un arbre d'entraînement de roue (40 ; 40a).

6. Module hybride selon la revendication 5,
**caractérisé en ce que** le boîtier d'embrayage (42 ; 42a) et l'espace de réception (38 ; 38a) se chevauchent au moins en partie radialement.

7. Système d'entraînement hybride pour un véhicule, comprenant :
- un moteur à combustion interne comprenant un vilebrequin en tant qu'arbre d'entraînement (12c),
- un module hybride (10c) selon l'une quelconque des revendications précédentes, le module hybride (10c) étant accouplé par le biais de l'agencement d'accouplement (20c) au vilebrequin (12c) du moteur à combustion interne,
- un agencement de transmission (14c) avec un arbre d'entrée de boîte de vitesses constituant l'arbre de prise de force (18c).

8. Système d'entraînement hybride selon la revendication 7,
**caractérisé en ce que** dans l'agencement de transmission (14c) est prévu un agencement d'embrayage pour interrompre/établir de manière sélective une liaison de transfert de couple entre l'arbre d'entrée de transmission et un arbre de sortie de transmission.

9. Système d'entraînement hybride selon la revendication 7 ou 8,
**caractérisé en ce que** le moyeu de prise de force (52c) forme un moyeu d'entrée de transmission.

10. Système d'entraînement hybride selon la revendication 9,
**caractérisé en ce que** le moyeu d'entrée de transmission forme un moyeu de pompe ou est assemblé à celui-ci pour former une unité.
